# EUROPÄISCHE PATENTSCHRIFT

(11) **EP 2 740 629 B1**
(45) Veröffentlichungstag und Bekanntmachung des Hinweises auf die Patenterteilung: **04.05.2016**
(21) Anmeldenummer: 13192258.5
(22) Anmeldetag: 11.11.2013
(51) Int. Cl.: B60L 5/20

(54) **Schleifelement, Stromabnehmer und elektrisch antreibbares Fahrzeug**
Sliding element, current collector and electrically driven vehicle
Élément frotteur, consommateur de courant et véhicule à entraînement électrique

(30) Priorität: 04.12.2012 DE 102012222219
(43) Veröffentlichungstag der Anmeldung: 11.06.2014
(73) Patentinhaber: PanTrac GmbH, 10367 Berlin (DE)
(72) Erfinder: Schulz, Andreas, 12623 Berlin (DE)
(74) Vertreter: Gulde & Partner

(56) Entgegenhaltungen:
- WO-A1-2004/020241
- DE-B- 1 060 900
- DE-C1- 3 905 962
- JP-A- 2005 261 065

## Beschreibung

Die Erfindung betrifft ein Schleifelement für Stromabnehmer zur Ableitung von elektrischer Energie von einer Fahrleitung auf ein elektrisch antreibbares Fahrzeug sowie einen Stromabnehmer und ein elektrisch antreibbares Fahrzeug.

Schleifelemente der gattungsgemäßen Art sind bekannt. Derartige Schleifelemente sind Bestandteile eines Stromabnehmers, der mit einem elektrisch antreibbaren Fahrzeug verbunden ist. Das Schleifelement steht in Kontakt mit einer ortsfesten Fahrleitung und dient der Ableitung elektrischer Energie von der Fahrleitung auf das elektrisch antreibbare Fahrzeug.

Die Schleifelemente umfassen einen Träger und wenigstens ein auf dem Träger angeordnetes Kohleschleifstück. Eine Verbindung zwischen dem Träger und dem wenigstens einen Kohleschleifstück erfolgt bekanntermaßen durch Verkleben. Hierbei wird ein elektrisch leitfähiger Kleber eingesetzt. Ziel ist es, einen möglichst niedrigen Übergangswiderstand zwischen den Kohleschleifstücken und dem Träger zu erzielen. Die Erfindung kann auch durch andere geeignete Maßnahmen, beispielsweise Klemmen, Nieten, Schrauben, Löten oder dergleichen erfolgen.

Es ist bekannt, den Träger aus einem in seinen seitlichen Randabschnitten leicht gebogenen metallischen Formteil, beispielsweise aus Aluminium, auszubilden. Auf den Träger wird in seinem mittleren Bereich, der in Kontakt mit der Fahrleitung kommen soll, das wenigstens ein Kohleschleifstück aufgeklebt. Seitlich der Kohleschleifstücke werden auf den Träger zusätzliche Abdeckkappen montiert, damit sich eine bündige Oberfläche zu den Kohleschleifstücken ergibt. Ein derartiger Kohleschleifbügel ist beispielsweise aus DE 10 44 143 A bekannt.

Der Träger kann auch einen Luftkanal enthalten, der mit einem Druckluftanschluss verbunden ist. Dieser Druckluftkanal erstreckt sich im Wesentlichen über die gesamte Länge des Trägers, das heißt sowohl über den Bereich der Kohleschleifstücke als auch über die Bereiche der Abdeckkappen. Dieser Druckluftkanal dient der Erkennung eines Verschleißes oder einer Beschädigung der Kohleschleifstücke. Bei zu starkem Verschleiß oder zu starker Beschädigung wird der unter Druckluft stehende Kanal freigelegt, so dass ein Druckabfall stattfindet, der durch ein entsprechendes Steuergerät detektiert wird. Der Stromabnehmer wird dann abgesenkt, das heißt von der Fahrleitung getrennt.

Bei den bekannten Schleifelementen ist nachteilig, dass die zusätzlichen Abdeckkappen über Befestigungselemente an dem Träger befestigt werden müssen. Diese Befestigungselemente können sich lockern. Dies kann einerseits zu einem unkontrollierten Wegschleudern der Abdeckkappen während einer Fahrt des elektrisch antreibbaren Fahrzeuges führen. Andererseits kann durch Lockerung der Abdeckelemente der unter diesen liegende Druckluftkanal eine Undichtigkeit erhalten, die zu einer fehlerhaften Verschleiß- beziehungsweise Beschädigungsanzeige führen kann.

Aus JP 2005-261 065 A ist ein Hilfsschleifträger bekannt, der zur Aufnahme eines Kohleschleifstückes geeignet ist. Der Hilfsschleifträger selbst besteht aus einem zusammengesetzten Träger aus einem Aluminiumgrundkörper und einem an dem Aluminiumgrundkörper angeordneten Hilfsschleifstück, das aus einem Metallkeramikwerkstoff besteht.

Der Erfindung liegt daher die Aufgabe zugrunde, ein Schleifelement der gattungsgemäßen Art zu schaffen, das einfach aufgebaut ist und einen zuverlässigen Betrieb von mit Schleifelementen ausgestatteten Stromabnehmern beziehungsweise elektrisch antreibbaren Fahrzeugen gestattet.

Erfindungsgemäß wird diese Aufgabe durch ein Schleifelement mit den in Anspruch 1 genannten Merkmalen gelöst. Dadurch, dass der Träger einstückig ausgebildet ist und zur Aufnahme des wenigstens einen Kohleschleifstücks eine wannenförmige Vertiefung derart ausbildet, dass das wenigstens eine Kohleschleifstück an seinen Stirnseiten bündig mit der Oberseite des Trägers abschließt, ist vorteilhaft möglich, auf die Anordnung zusätzlicher Abdeckkappen zu verzichten. Der Träger ist quasi in seinen seitlichen Abschnitten, die neben der die Kohleschleifstücke aufnehmenden Vertiefung liegen, materialstärker ausgebildet. Dieser materialstärkere Bereich kann gleichzeitig die Druckluftkanäle aufnehmen, so dass diese in diesen Bereichen nicht zusätzlich abgedichtet werden müssen. Die Druckluftkanäle sind quasi ins Volle des Trägermaterials eingearbeitet.

In bevorzugter Ausgestaltung der Erfindung ist vorgesehen, dass der Träger mit dem wenigstens einen Kohleschleifstück elektrisch leitfähig verbunden, insbesondere verklebt, ist. Hierdurch wird vorteilhaft möglich, in einfacher Weise eine Verbindung zwischen dem Kohleschleifstück und dem Träger herzustellen, wobei das wenigstens ein Kohleschleifstück in die wannenförmige Vertiefung des Trägers eingeklebt wird. Dieses wird hierdurch in der wannenförmigen Vertiefung vorfixiert und über den Kleber stoffschlüssig mit dem Träger elektrisch leitend verbunden.

Darüber hinaus ist in bevorzugter Ausgestaltung der Erfindung vorgesehen, dass der Träger einen Druckluftkanal für eine Verschleißanzeige des wenigstens einen Kohleschleifstückes aufweist, wobei der Druckluftkanal in den Endabschnitten des Trägers vollständig vom Träger umschlossen ist. Hierdurch wird vorteilhaft möglich, auf zusätzliche Abdichtmaßnahmen des Druckluftkanals im Bereich der Endabschnitte zu verzichten. Der Kanal wird komplett von den einstückigen Endabschnitten des Trägers umschlossen.

Die Aufgabe wird ferner durch einen Stromabnehmer gelöst, der ein erfindungsgemäßes Schleifelement umfasst.

Ein weiterer Aspekt der Erfindung ist ein elektrisch antreibbares Fahrzeug, insbesondere ein elektrisch antreibbares Schienenfahrzeug, das den erfindungsgemäßen Stromabnehmer mit den erfindungsgemäßen Schleifelementen umfasst.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine Seitenansicht eines erfindungsgemäßen Schleifelementes;
- Figur 2: eine Schnittdarstellung durch das Schleifelement und
- Figur 3: eine weitere Schnittdarstellung durch das Schleifelement.

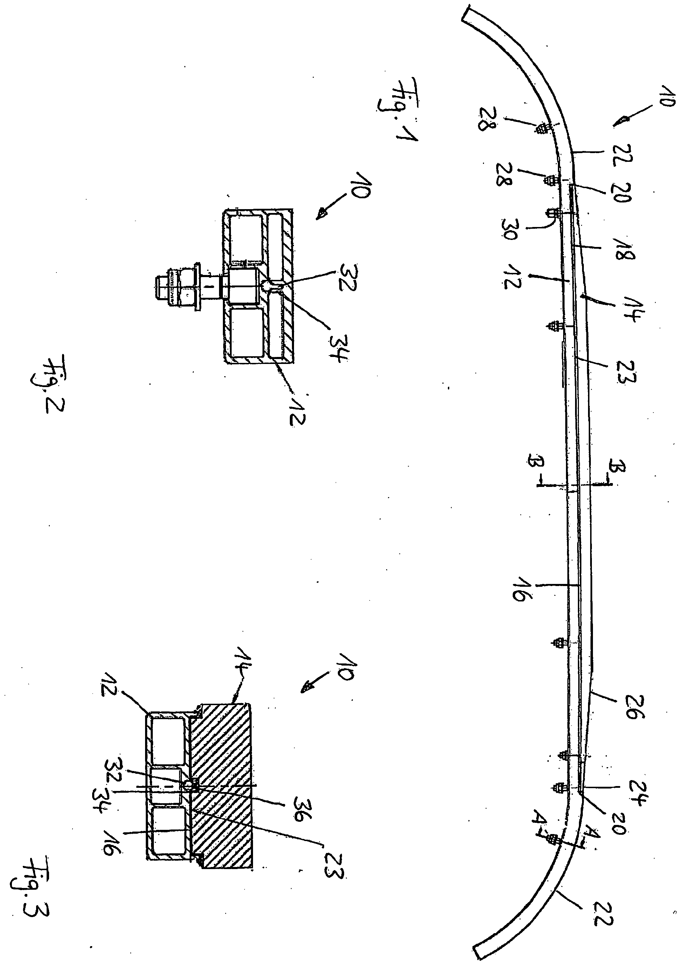

Figur 1 zeigt in einer schematischen Seitenansicht ein insgesamt mit 10 bezeichnetes Schleifelement für einen nicht dargestellten Stromabnehmer. Der Stromabnehmer ist auf einem ebenfalls nicht dargestellten elektrisch antreibbaren Fahrzeug, beispielsweise ein Schienenfahrzeug, montiert.

Das Schleifelement 10 umfasst einen Träger 12 und ein Kohleschleifstück 14.

Der Träger 12 ist insgesamt einstückig ausgebildet und bildet an seiner Oberseite eine wannenförmige Vertiefung 16 aus, innerhalb der das Kohleschleifstück 14 angeordnet ist. Die wannenförmige Vertiefung 16 geht von einem Grund 18 über seitliche Stirnflächen 20 in eine Oberseite 22 des Trägers 12 über. In dieser wannenförmigen Vertiefung 16 ist das Kohleschleifstück 14 angeordnet. Hierbei ist das Kohleschleifstück 14 mit dem Träger 12 über eine im Einzelnen nicht dargestellte, elektrisch leitfähige Kleberschicht 23 stoffschlüssig verbunden.

Das Kohleschleifstück 14 besitzt eine derartige Form, dass Stirnseiten 24 des Kohleschleifstücks 14 mit den Stirnflächen 20 der Vertiefung 16 korrespondieren. Das heißt, im Übergang zwischen einer Oberfläche 26 des Kohleschleifstückes 14 und der Oberseite 22 des Trägers 12 ergibt sich eine bündige Anordnung. Auch an den Stirnflächen 24 beziehungsweise 20 können Kohleschleifstücke 14 und Träger 12 miteinander verklebt sein.

Der Träger 12 besitzt hier angedeutete Kontakte 28, über die das Schleifelement 10 mit elektrischen Einrichtungen des nicht dargestellten elektrisch antreibbaren Fahrzeuges verbunden werden kann.

Ferner umfasst der Träger 12 einen Druckluftanschluss 30, über den ein in Figur 1 nicht ersichtlicher, im Inneren des Trägers 12 angeordneter Kanal mit Druckluft beaufschlagbar ist.

Figur 2 zeigt eine Schnittdarstellung durch den Träger 12 entlang der Linie A-A gemäß Figur 1. Es wird deutlich, dass in diesem Bereich der Träger 12 als Hohlkammerprofil einstückig ausgebildet ist. Der Träger 12 besteht beispielsweise aus einem Aluminiumprofil. In den Träger 12 ist der Druckluftkanal 32 integriert. Dieser ist vollständig von Material des Trägers 12 umschlossen und bedarf somit in den Bereichen seitlich der Kohleschleifstücke 14 keiner weiteren Abdichtung. Der Druckluftkanal 32 ist hierbei in einem Bereich 34 des Trägers 12 angeordnet, der quasi einen innen liegenden Block bildet, der von benachbarten Hohlräumen umgeben ist.

Figur 3 zeigt eine Schnittdarstellung durch das Schleifelement 10 im Bereich der Linie B-B gemäß Figur 1. Deutlich wird die Anordnung des Kohleschleifstückes 14 auf dem Träger 12. Der Träger 12 ist im Bereich des Kohleschleifstückes 14 in seiner Höhe niedriger ausgebildet als in den Bereichen seitlich des Kohleschleifstückes 14, wie dies beispielsweise in Figur 2 gezeigt ist. Aus dem Träger 12 ragt der Block 34 mit dem Druckluftkanal 32 heraus. Das Kohleschleifstück 14 bildet eine entsprechende Nut 36 aus, die den Block 34 umgibt. Der Druckluftkanal 32 ist in Richtung des Kohleschleifstückes 14 offen. Eine Abdichtung des Druckluftkanals 32 erfolgt durch die Klebeverbindung zwischen dem Kohleschleifstück 14 und dem Träger 12, so dass Undichtigkeiten nur über einen Verschleiß oder eine Beschädigung des Kohleschleifstückes 14 auftreten können. Aufbau und Funktion derartiger Verschleißanzeigen mittels Druckluftkanälen sind allgemein bekannt und sollen im Rahmen der vorliegenden Beschreibung nicht weiter erläutert werden.

### Bezugszeichenliste

- 10: Schleifelement
- 12: Träger
- 14: Kohleschleifstück
- 16: wannenförmige Vertiefung
- 18: Grund
- 20: seitliche Stirnfläche
- 22: Oberseite
- 23: Kleberschicht
- 24: Stirnseite
- 26: Oberfläche
- 28: Kontakte
- 30: Druckluftanschluss
- 32: Druckluftkanal
- 34: Bereich, innen liegender Block
- 36: Nut

## Patentansprüche

1. Schleifelement (10) für Stromabnehmer zur Ableitung von elektrischer Energie von einer Fahrleitung auf ein elektrisch antreibbares Fahrzeug, wobei die Fahrleitung ortsfest angeordnet ist und der Stromabnehmer mit dem Fahrzeug verbunden ist, und das Schleifelement (10) einen Träger (12) und wenigstens ein auf dem Träger (12) angeordnetes Kohleschleifstück (14) umfasst, **dadurch gekennzeichnet, dass** der Träger (12) einstückig ausgebildet ist und zur Aufnahme des wenigstens einen Kohleschleifstücks (14) eine wannenförmige Vertiefung (16) derart ausbildet, dass das wenigstens eine Kohleschleifstück (14) an seinen Stirnseiten (24) bündig mit der Oberseite (22) des Trägers (12) abschließt.

2. Schleifelement nach Anspruch 1, **dadurch gekennzeichnet, dass** der Träger (12) mit dem wenigstens einen Kohleschleifstück (14) elektrisch leitend verbunden ist.

3. Schleifelement nach Anspruch 2, **dadurch gekennzeichnet, dass** der Träger (12) mit dem wenigstens einen Kohleschleifstück (14) verklebt ist.

4. Schleifelement nach einem der vorhergehenden Ansprüche, **dadurch gekennzeichnet, dass** der Träger (12) einen Druckluftkanal (32) für eine Verschleißanzeige des wenigstens einen Kohleschleifstückes (14) aufweist, wobei der Druckluftkanal (32) in den Endabschnitten des Trägers (12) vollständig vom Träger (12) umschlossen ist.

5. Schleifelement nach Anspruch 4, **dadurch gekennzeichnet, dass** der Druckluftkanal (32) in einem Block (34) des Trägers (12) ausgebildet ist.

6. Schleifelement nach einem der vorhergehenden Ansprüche, **dadurch gekennzeichnet, dass** der Träger (12) aus einem metallischen Werkstoff besteht.

7. Schleifelement nach Anspruch 6, **dadurch gekennzeichnet, dass** der Träger (12) aus Aluminium besteht.

8. Stromabnehmer, umfassend ein Schleifelement (10) nach einem der Ansprüche 1 bis 7.

9. Elektrisch antreibbares Fahrzeug, insbesondere elektrisch antreibbares Schienenfahrzeug, umfassend einen Stromabnehmer nach Anspruch 8.

## Claims

1. A sliding element (10) for a current collector for conducting electrical energy from an overhead contact line to an electrically driven vehicle, wherein the overhead contact line is fixed and the current collector is connected to the vehicle, and the sliding element (10) comprises a carrier (12) and at least one carbon contact shoe (14) located on the carrier (12), **characterized in that** the carrier (12) is formed in a single piece and a trough-shaped depression (16) is formed to receive the at least one carbon contact shoe (14) such that the at least one carbon contact shoe (14) is flush at its faces (24) with the top (22) of the carrier (12).

2. The sliding element according to Claim 1, **characterized in that the** carrier (12) is connected in an electrically conductive manner to the at least one carbon contact shoe (14).

3. The sliding element according to Claim 2, **characterized in that** the carrier (12) is bonded to the at least one carbon contact shoe (14).

4. The sliding element according to any one of the preceding claims, **characterized in that** the carrier (12) comprises a compressed air channel (32) for a wear indicator of the at least one carbon contact shoe (14), wherein the compressed air channel (32) is fully enclosed by the carrier (12) in the end sections of the carrier (12).

5. The sliding element according to Claim 4, **characterized in that** the compressed air channel (32) is formed in a block (34) of the carrier (12).

6. The sliding element according to any one of the preceding claims, **characterized in that** the carrier (12) consists of a metallic material.

7. The sliding element according to Claim 6, **characterized in that** the carrier (12) is made of aluminum.

8. A current collector, comprising a sliding element (10) according to any one of Claims 1 to 7.

9. An electrically driven vehicle, in particular an electrically driven rail vehicle, comprising a current collector according to Claim 8.

## Revendications

1. Elément frotteur (10) pour consommateur de courant destiné à la dérivation d'énergie électrique à partir d'une ligne caténaire vers un véhicule à entraînement électrique, la ligne caténaire étant disposée dans un endroit fixe et le consommateur de courant étant raccordé au véhicule, et l'élément frotteur (10) comprenant un support (12) et au moins un frotteur en carbone (14) disposé sur le support (12), **caractérisé en ce que** le support (12) est constitué d'une seule pièce et constitue, pour la réception du frotteur en carbone (14) au moins au nombre de un, un creux (16) en forme de cuvette de telle sorte que le frotteur en carbone (14) au moins au nombre de un se termine, au niveau des côtés frontaux (24), en affleurement avec le côté supérieur (22) du support (12).

2. Elément frotteur selon la revendication 1, **caractérisé en ce que** le support (12) est raccordé de façon électriquement conductrice au frotteur en carbone (14) au moins au nombre de un.

3. Elément frotteur selon la revendication 2, **caractérisé en ce que** le support (12) est assemblé par collage avec le frotteur en carbone (14) au moins au nombre de un.

4. Elément frotteur selon l'une des revendications précédentes, **caractérisé en ce que** le support (12) présente un conduit d'air comprimé (32) pour un affichage d'usure du frotteur en carbone (14) au moins au nombre de un, le conduit d'air comprimé (32) étant, dans les tronçons d'extrémité du support (12), entièrement entouré par le support (12).

5. Elément frotteur selon la revendication 4, **caractérisé en ce que** le conduit d'air comprimé (32) est constitué dans un bloc (34) du support (12).

6. Elément frotteur selon l'une des revendications précédentes, **caractérisé en ce que** le support (12) est composé d'un matériau métallique.

7. Elément frotteur selon la revendication 6, **caractérisé en ce que** le support (12) est composé d'aluminium.

8. Consommateur de courant, comprenant un élément frotteur (10) selon l'une des revendications 1 à 7.

9. Véhicule à entraînement électrique, en particulier véhicule ferroviaire à entraînement électrique, comprenant un consommateur de courant selon la revendication 8.
